# EUROPEAN PATENT APPLICATION

(11) **EP 4 307 227 A1**
(43) Date of publication of application: **17.01.2024**
(21) Application number: 23183377.3
(22) Date of filing: 04.07.2023
(51) Int. Cl.: G06T 7/20, B01L 3/00

(54) **A METHOD FOR TRACKING OBJECTS IN A FLOW CHANNEL**

(30) Priority: 11.07.2022 EP 22184089
(71) Applicant: Imec VZW, 3001 Leuven (BE)
(72) Inventor: Luo, Zhenxiang, 3000 Leuven (BE); Stakenborg, Tim, 3001 Heverlee (BE); Van Roy, Willem, 3360 Bierbeek (BE); Jayapala, Murali, 3010 Kessel-Lo (BE); Lin, Ziduo, 3001 Heverlee (BE); Yurt, Abdulkadir, 3001 Heverlee (BE)
(74) Representative: AWA Sweden AB

(57) **Abstract**

A method (100) for tracking objects (1) in a flow channel (2), comprising:
receiving (S102) a time series (20) of frames (21), each frame (21) comprising observed object positions (4), the time series (20) of frames (21) comprising a first set (30) of frames (21) and a first frame (31);
forming (S104) a first set (40) of tracks (41), each track (41) of the first set (40) of tracks (41) comprising observed object positions (4) from the first set (30) of frames (21);
expanding (S106) the first set (40) of tracks (41) by adding observed object positions (4) of the first frame (31);
detecting (S108) a track error indicating an improbable expansion of the first set (40) of tracks (41);
finding (S110) a track modification, being a modification to the expanded first set (40) of tracks (41), wherein finding the track modification is based on observed object positions (4) from at least three frames (21); and
modifying (S120) the expanded first set (40) of tracks (41) by the track modification.

## Description

### TECHNICAL FIELD

The present inventive concept relates, in general, to a method for tracking objects in a flow channel.

### BACKGROUND

In microfluidic applications, objects in a flow channel are often imaged by acquiring a time series of images. Based on such a time series of images, tracks of the respective objects may be extracted using a tracking algorithm. The objects may then be classified based on their movements, as derived from the tracks. For example, two different cell types may move differently, e.g. as a consequence of one cell type being heavier or larger than the other. There is still room for improvement of tracking algorithms.

### SUMMARY

It is an objective of the present inventive concept to facilitate tracking of objects in a flow channel at a high object throughput. It is a further objective to facilitate accurate tracking of objects in a flow channel at a high object throughput. It is a further objective to facilitate computationally efficient tracking of objects in a flow channel at a high object throughput. It is a further objective to facilitate fast tracking of objects in a flow channel at a high object throughput, in particular it is an objective to facilitate real-time tracking of objects in a flow channel at a high object throughput. These and other objectives of the inventive concept are at least partly met by the invention as defined in the independent claims. Preferred embodiments are set out in the dependent claims.

According to a first aspect, there is provided a method for tracking objects in a flow channel, the method comprising:
receiving a time series of frames, each frame being associated with a time and comprising observed object positions, the observed object positions being object positions observed in the flow channel at said time, the time series of frames comprising a first set of frames and a first frame, the first frame succeeding an end frame of the first set of frames;
forming a first set of tracks, each track of the first set of tracks comprising observed object positions from the first set of frames, each track representing a path in space and time of one individual object in the flow channel;
expanding the first set of tracks by adding observed object positions of the first frame to the first set of tracks;
detecting a track error, the track error being a part of a track of the expanded first set of tracks which indicates an improbable expansion of the first set of tracks;
finding a track modification, the track modification being a modification to the expanded first set of tracks which removes the track error, wherein finding the track modification is based on observed object positions from at least three frames of the time series of frames; and
modifying the expanded first set of tracks by the track modification.

The objects may be living objects e.g. cells or bacteria. Alternatively, the objects may be non-living objects such as particles, fluorescent markers, beads etc. The flow channel may be a microfluidic flow channel or any other type of flow channel. The flow channel may, although not necessarily, comprise posts or pillars that modify the movements of the objects, e.g. by the objects bumping into the posts while travelling through the flow channel. Such posts enable classification of similar types of objects. Two cell types which move in a similar way in the absence of posts may move very differently in the presence of posts. The objects may flow in a liquid or in a gas in the flow channel.

To aid the understanding of the invention, the concept of frames will hereinafter be discussed briefly. The frames will be described as representing observed object positions which are observed in images of the objects in the flow channel. However, it should be understood that the observed object positions of the frames may alternatively be derived by other means.

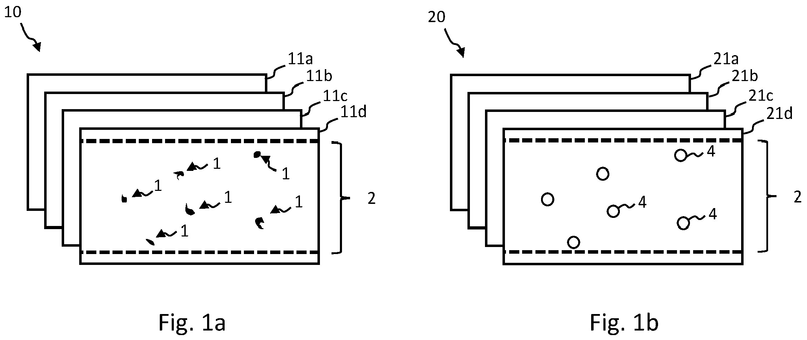

Fig. 1 illustrates how a time series 20 of frames 21 may be derived from a time series 10 of images 11. Fig. 1a illustrates the time series 10 of images 11 and Fig. 1b illustrates the time series 20 of frames 21 derived from said time series 10 of images 11. Each frame 21 may correspond to an image 11 of the flow channel 2 and the time associated with the frame 21 may be a time representing the acquisition time of said corresponding image. The objects 1 in the flow channel 2 may be imaged by acquiring the time series 10 of images 11, herein illustrated as images 11a, 11b, 11c, and 11d. The time series 10 of images 11 may be converted into the time series 20 of frames 21 wherein each frame 21, herein illustrated as frames 21a, 21b, 21c, and 21d, comprise the observed object positions 4 as derived from the image 11 corresponding to the frame 21. For example, the observed object positions comprised in frame 21d, may be object positions observed in image 11d.

A frame may e.g. comprise a list of observed object positions together with the image from which the frame is derived.

As an alternative, a frame may comprise a list of observed object positions together with parts of the image from which the frame is derived, e.g. parts of the image around the observed object positions.

As an alternative, a frame may comprise a list of observed object positions, without the image from which the frame is derived.

The observed object positions may be represented in the frame in other ways than in a list. The observed object positions may be represented in a matrix wherein each matrix element corresponds to a position in the flow channel, e.g. corresponds to a certain pixel in the image from which the frame is converted. An object position may be marked in the matrix of the frame by a number, e.g. '1', in a matrix element.

A frame may comprise further information in addition to observed object positions. A frame may comprise information regarding the objects in the image corresponding to the frame. Such information may be e.g.
object size; and/or
object brightness; and/or
object shape; and/or
object z-position; and/or
object average refractive index; and/or
object absorbance; and/or
object boundary uniformity; and/or
object orbital movements.

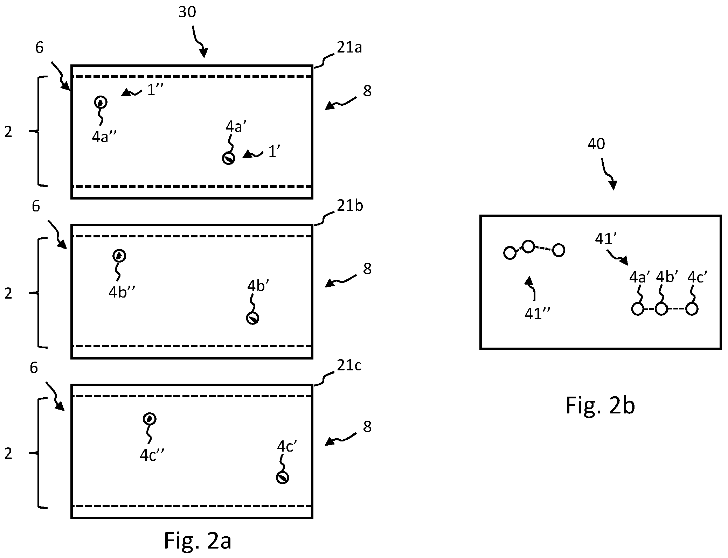

Fig. 2 illustrates how tracks 41 may be formed from a set 30 of frames 21. Fig. 2a illustrates the set 30 of frames 21, comprising frames 21a-c, which represents movements of object 1' and object 1". The frames 21a-c comprise observed object positions 4a', 4b', 4c', and 4a", 4b", 4c". In Fig. 2a the frames 21a-c further comprise images of object 1' and 1". In Fig. 2a, the objects 1', 1" moves from left to right, i.e. from a left edge of the frame 21, which may be construed as the entrance 6 of the flow channel 2, to a right edge of the frame 21, which may be construed as the exit 8 of the flow channel 2. A tracking algorithm may deduce that observed object positions 4a', 4b', 4c' represent movements of object 1' and observed object positions 4a", 4b", 4c" represent movements of object 1". Thus, the tracking algorithm may form a set 40 of tracks 41 comprising track 41' and 41", as illustrated in Fig. 2b. It should be noted that Fig. 2b is a schematic illustration. The tracks 41 may be represented in many different ways, e.g. as a list of observed object positions.

Prior art tracking methods generally process the frames sequentially and expand the tracks for each new frame. Thus, in a prior art tracking method a set of tracks may be formed based on frames 1 to i, wherein i is an integer. The set of tracks may then be expanded with observed object positions taken from frame i+1. The expanded set of tracks may then be further expanded with observed object positions taken from frame i+2, and so forth.

It is a realization of the inventors that tracking of objects in a flow channel at high throughput, i.e. a flow channel where many objects pass per time unit, is desirable but hard to achieve with prior art tracking methods. For example, cell classification based on cell tracks in a microfluidic channel is useful in lab-on-a-chip applications. Classification may be based on e.g.
- a first cell type moving slower than to a second cell type; and/or
- a first cell type taking a longer path than to a second cell type; and/or
- a first cell type accelerates or decelerating faster than to a second cell type.

A high throughput of cells enables fast analysis. A high throughput may require a high density of objects in the flow channel and a fast flow speed, which in turn gives rise to a large object displacement per frame. Under such conditions, a prior art tracking method may stop working, e.g. because objects are mis-identified such that observed object positions are added to the wrong track when expanding the tracks. Alternatively, a prior art tracking method may require so much computational resources that it cannot operate in real time. This in turn means that the analysis time still remains long even though the throughput of the flow channel is high.

According to the invention, forming the first set of tracks may be done by any type of tracking method, e.g. any type of prior art tracking method. As an example, the first set of frames may be frame 1 to i of the time series of frames, such that the first set of tracks comprises observed object positions from frame 1 to i.

It is a realization that expanding the first set of tracks by adding observed object positions of the first frame to the first set of tracks may be a fast way of building the tracks. Continuing the above example, the end frame of the first set of frames may be frame i of the time series of frames and thus, the first frame may be frame i+1 of the time series of frames.

It is a further realization that expanding a set of tracks sometimes introduces errors, e.g. if an observed object position is added to the wrong track. Further, expanding the tracks may have a knock-on effect of errors in later expansions of the tracks if the tracks are just expanded with the following frames. Thus, it is a realization that a high accuracy in the tracks may be maintained by: detecting a track error, finding a track modification, and modifying the expanded first set of tracks; even in the case of a high throughput of objects and real-time tracking. For example, frames may be processed sequentially and the tracks may be expanded for each new frame. A check for track errors may be made after each expansion or after a number of unchecked expansions, e.g. after at least 3, at least 5, or at least 10 unchecked expansions. If a track error is detected, a search for track modifications may be performed, such that a track modification may be found. Finding the track modification is based on observed object positions from at least three frames of the time series of frames. For example, if the first frame is frame i+1 of the time series of frames and the expansion of the first set of tracks resulted in a track error, then finding the track modification may be based on frames i-2, i-1, and i. As another example, finding the track modification may be based on frames i-3, i-2, i-1, and i. As another example, finding the track modification may be based on frames i-1, i, and i+1. Finding the track modification may be based on at least three consecutive frames. By basing the track modification on at least three frames, a high accuracy of the tracks is achieved. Said accuracy may come at a computational cost as processing at least three frames simultaneously may be computationally harder than e.g. only processing two frames at a time. However, processing at least three frames simultaneously may not be needed very often, e.g. not needed at the track expansion for every single frame, it may only be needed when a track error is detected. Consequently, the method may facilitate tracking of objects in a flow channel at a high throughput. The tracking may be accurate and yet computationally efficient. Thus, fast tracking of objects in a high throughput flow channel, in particular real-time tracking, is facilitated. It should be understood that the method may be particularly advantageous when used on frames derived from images which have been acquired by holographic imaging (also called lens-free imaging) as these images may have a large field of view which in turn enable large object displacement per frame.

When expanding the first set of tracks, observed object positions of the first frame may be added to the first set of tracks either as part of an existing track in the first set of tracks or as a new track. When expanding the first set of tracks, observed object positions of the first frame may be added to the first set of tracks without changing the tracks in the parts relating to frames prior to the first frame. Thus, observed object positions of the first frame may be concatenated to existing tracks in the first set of tracks.

The method may be performed by one or more processing units. For example, the method may be performed by a processing unit of a computer.

The processing unit may receive the time series of frames from an imager, e.g. from an imager connected to the computer, and then process said frames. Alternatively, the processing unit may receive a time series of images from an imager, e.g. from an imager connected to the computer. The processing unit may identify object positions in said images and form frames. Each frame may herein comprise e.g. the image and a list of object positions. Said frames may thereby be received by the processing unit. The processing unit may then form the first set of tracks, expand the first set of tracks, detect the track error, find the track modification, and modify the expanded first set of tracks. Alternatively, some of these tasks may be passed on to another processing unit.

Expanding the first set of tracks may be based on solely two frames of the time series of frames, said sole two frames being the end frame of the first set of frames and the first frame. This may enable computationally efficient and/or fast expansion of the first set of tracks.

Detecting the track error may be done in various ways.

The track error may comprise a part of a track of the expanded first set of tracks which shares one observed object position with a part of another track of the expanded first set of tracks. Thus, two tracks of the expanded first set of tracks comprising the same observed object position in the same time domain may be a track error. For example, if an observed object position in frame A has been entered into two different tracks in a time domain of said tracks that corresponds to the time associated with frame A, this may constitute a track error. Such a track error may indicate a possible mis-identification of two objects. The objects may e.g. cross paths which may result in an erroneous expansion of the tracks. Alternatively, one object may not have been identified at all which may result in the tracking algorithm uses the same observed object position twice. Two objects being at the same place at the same time may be considered an improbable event. Thus, this may be regarded as an improbable expansion of the tracks.

The track error may comprise a beginning of a track of the expanded first set of tracks which is not at an entrance of the flow channel. The beginning of the track may be the first observed object position of the track. The entrance of the flow channel may correspond to one of the edges of the frames, e.g. in Fig. 2a the left edge of the frames. At an entrance of the flow channel may be construed as within a threshold distance from the entrance of the flow channel, e.g. within a distance corresponding to 10 % of the width of the frame. An object appearing out of nowhere may be considered an improbable event. Thus, this may be regarded as an improbable expansion of the tracks.

The track error may comprise an end of a track of the expanded first set of tracks which is not at an exit of the flow channel. The beginning of the track may be the first observed object position of the track. The exit of the flow channel may correspond to one of the edges of the frames, e.g. in Fig. 2a the right edge of the frames. At an exit of the flow channel may be construed as within a threshold distance from the exit of the flow channel, e.g. within a distance corresponding to 10 % of the width of the frame. An object disappearing far from an exit may be considered an improbable event. Thus, this may be regarded as an improbable expansion of the tracks.

The track error may comprise a part of a track of the expanded first set of tracks within a forbidden region, the forbidden region being a region of the flow channel in which the objects cannot enter. A forbidden region may be a wall of the flow channel or a pillar or post in the flow channel. An object moving through a forbidden region may be considered an improbable event. Thus, this may be regarded as an improbable expansion of the tracks.

The track error may comprise a part of a track of the expanded first set of tracks merging with another track of the expanded first set of tracks. An object merging with another object may be considered an improbable event. Thus, this may be regarded as an improbable expansion of the tracks.

The track error may comprise a part of a track of the expanded first set of tracks splitting out from another track of the expanded first set of tracks. An object splitting into two objects may be considered an improbable event. Thus, this may be regarded as an improbable expansion of the tracks.

It should be understood that the track error may be detected in the last time entry of the expanded first set of tracks, i.e. in the time entry associated with the first frame (frame i+1 in the above example). Alternatively, the track error may be detected in an earlier time entry of the expanded first set of tracks. Some track errors may not be evident until after a few expansions of the first set of tracks.

It should be understood that finding the track modification may be based on a subset of tracks within the expanded first set of tracks. Thus, calculations for finding the track modifications may not necessarily involve all tracks of the expanded first set of tracks. This facilitates a computationally efficient and/or fast finding of the track modification.

Finding the track modification may comprise:
selecting the subset of tracks within the expanded first set of tracks, the selected subset of tracks being tracks adjacent to the track error;
wherein the track modification involves only tracks of the expanded first set of tracks that are within the selected subset of tracks. Tracks adjacent to the track error may be tracks having a part of the track which is, in both space and time, within a threshold range of the track error. The selected subset of tracks may be a number of tracks, e.g. 1 track, 2 tracks, or 5 tracks, which passes closest to the track error in space and time. The subset of tracks may comprise the track having the track error.

Finding the track modification may be based on a region of interest, the region of interest representing observed object positions in part of the flow channel. Thus, calculations for finding the track modification may be based on parts of frames rather than the entire frames. Thus, finding the track modification may be based on parts of the at least three frames of the time series of frames. This facilitates a computationally efficient and/or fast finding of the track modification. As an example, if a track error, which corresponds to an observed object position at image coordinates [a,b] in frame i-2 is detected, then the region of interest may correspond to image coordinates [aN, ..., a+N; b-M,... ,b+M], wherein N and M are integers. This region of interest may be applied to the at least three frames of the time series of frames used in finding the track modification, e.g. frames i-3, i-2, i-1, and i.

N may correspond to e.g. 10 times an object size, or 20 times an object size, the object size may be e.g. the object radius. Alternatively, N may correspond to e.g. 10%, or 20%, of the width or height of the frame. Alternatively, N may correspond to two times, or four times, a distance an object travels in the flow channel between two consecutive frames.

M may correspond to e.g. 10 times an object size, or 20 times an object size , the object size may be e.g. the object radius. Alternatively, M may correspond to e.g. 10%, or 20%, of the width or height of the frame. Alternatively, M may correspond to two times, or four times, a distance an object travels in the flow channel between two consecutive frames.

The track modification may comprise a modification of a part of a track that represents a time before the time associated with the first frame. Some track errors may be easier to detect after a few expansions of the first set of tracks. Modifying part of a track that represents a time before the time associated with the first frame makes it possible to correct such track errors.

Finding the track modification may comprise:
forming a plurality of candidate track modifications;
comparing each of the plurality of candidate track modifications to a criterion, the criterion indicating a probable expansion of the first set of tracks;
selecting one of the candidate track modifications which fits the criterion as the track modification to modify the expanded first set of tracks.

The plurality of candidate track modifications may comprise track modifications representing all or some of the different permutations of how observed object positions in the vicinity, in both space and time, of the track error can be combined into tracks.

The criterion indicating a probable expansion of the first set of tracks may be a criterion indicating probable and/or physically reasonable movements of objects. For example, the criterion may penalize improbable and/or unreasonable movements of the objects.

Finding the track modification this way provides an accurate track modification. Several different alternatives of object movements may be reviewed and the most probable or one of the most probable may be selected.

The criterion may be designed in many different ways.

The criterion may comprise a velocity variance of the object at observed object positions of the candidate track modification being below a threshold. In some situations (e.g. objects moving in a laminar flow or in a region of the flow channel with few obstacles, pillars, or posts) a small variance in velocity may indicate a probable movement. Objects may not be likely to accelerate and decelerate in such situations. Thus, candidate track modifications indicating such movements may be improbable. The threshold of the velocity variance may e.g. be 10% of the average speed of the object represented by the track. As an alternative, the criterion may be that a velocity variance of the object at observed object positions of the candidate track modification is minimized.

The criterion may comprise a brightness variance of the object at observed object positions of the candidate track modification being below a threshold. Objects may not be likely to change brightness, i.e. blink. Thus, candidate track modifications indicating such brightness changes may be improbable. The threshold of the brightness variance may e.g. be 10% of the average brightness of the object represented by the track. As an alternative, the criterion may be that a brightness variance of the object at observed object positions of the candidate track modification is minimized.

The criterion may comprise a size variance of the object at observed object positions of the candidate track modification being below a threshold. Objects may not be likely to change size. However, the size may be perceived differently depending on the perspective as the object is imaged. Nevertheless, large changes in the perceived size may be improbable. Thus, candidate track modifications indicating such size changes may be improbable. The threshold of the size variance may e.g. be 10% of the average size of the object represented by the track. As an alternative, the criterion may be that a size variance of the object at observed object positions of the candidate track modification is minimized.

The criterion may comprise a circularity variance of the object at observed object positions of the candidate track modification being below a threshold. Objects may not be likely to change circularity. However, the circularity may be perceived differently depending on the perspective as the object is imaged. Nevertheless, large changes in the perceived circularity may be improbable. Thus, candidate track modifications indicating such circularity changes may be improbable. The threshold of the circularity variance may e.g. be 10% of the average circularity of the object represented by the track. As an alternative, the criterion may be that a circularity variance of the object at observed object positions of the candidate track modification is minimized.

The criterion may comprise a z-direction variance of the object at observed object positions of the candidate track modification being below a threshold. In the case of lens free imaging, such as interference based imaging, the position of the object in the z-direction (i.e. distance to the imaging device) may be derived. The position of the object in the z-direction may correspond to the depth at which the object moves in the flow channel. Objects may not be likely to move up and down in the flow channel, i.e. change depth. Thus, candidate track modifications indicating such depth changes may be improbable. The threshold of the z-direction variance may e.g. be 10% of the average z-direction distance of the object represented by the track. As an alternative, the criterion may be that a z-direction variance of the object at observed object positions of the candidate track modification is minimized.

The criterion may comprise a total path length of the candidate track modification being below a threshold. Objects may be likely to take the shortest path. Thus, candidate track modifications indicating a long path length may be improbable. The threshold path length may by e.g. 150% of the frame width. As an alternative, the criterion may be that a total path length of the object at observed object positions of the candidate track modification is minimized.

The criterion may comprise a variance in:
object size; and/or
object brightness; and/or
object shape; and/or
object z-position; and/or
object average refractive index; and/or
object absorbance; and/or
object boundary uniformity; and/or
object orbital movements.

Expanding the first set of tracks may comprise applying a local tracking algorithm operating on the end frame of the first set of frames and the first frame. A local tracking algorithm may be an algorithm which determines an expansion of a track based on local information around the track, e.g. around the latest entry of the track. The local information may be local temporal information (i.e. two consecutive frames) and/or local spatial information (i.e. a limited region around the track). The local tracking algorithm may be a greedy tracking algorithm, a nearest neighbor tracking algorithm, or a Kalman filter tracking algorithm. Expanding the first set of tracks this way facilitates that the expansion of the tracks is computationally efficient and/or fast.

Finding the track modification may comprise applying a global tracking algorithm on the at least three frames of the time series of frames. A global tracking algorithm may be an algorithm that is not limited to local temporal or spatial information. The global tracking algorithm may be a tracking algorithm based on dynamic programming, a multi-hypothesis algorithm, or a global optimization problem algorithm. Finding the track modification this way provides an accurate track modification.

Finding the track modification may comprise calculating a velocity from at least one track of the expanded first set of tracks. Using the velocity may be a very efficient way of finding a probable track modification. A velocity may be calculated in many different ways. As an example, consider the case of a first and a second observed object position being part of the same track. A velocity may then be calculated as a distance travelled between said first and said second observed object positions divided by a difference between the times associated with the first and a second observed object position. The calculated velocity may represent a velocity of the object at the first observed object position, at the second observed object position, or during travel between the first and second observed object positions.

The at least three frames of the time series of frames may comprise at least one frame succeeding the first frame. When a track error has been detected at a certain time instance, it may be useful to look into a future time instance in order to determine how to resolve the error. In this way an accurate track modification is provided.

According to a second aspect of the invention, there is provided a computer program comprising instructions which, when the program is executed by a computer, cause the computer to carry out the steps of the method according to the first aspect of the invention.

According to a third aspect of the invention, there is provided a computer-readable storage medium comprising instructions which, when executed by a computer, cause the computer to carry out the steps of the method.

Effects and features of the second and third aspect are generally analogous to those described above in connection with the first aspect. Embodiments mentioned in relation to the first aspect are generally compatible with the second aspect.

### BRIEF DESCRIPTION OF THE DRAWINGS

The above, as well as additional objects, features and advantages of the present inventive concept, will be better understood through the following illustrative and non-limiting detailed description, with reference to the appended drawings. In the drawings like reference numerals will be used for like elements unless stated otherwise.
Fig. 1a illustrates a time series of images
Fig. 1b illustrates a time series of frames
Fig. 2a illustrates a set of frames
Fig. 2b illustrates a set of tracks
Fig. 3 illustrates a flow chart of a method

### DETAILED DESCRIPTION

In cooperation with attached drawings, the technical contents and detailed description of the present invention are described thereinafter according to a preferable embodiment, being not used to limit the claimed scope. This invention may be embodied in many different forms and should not be construed as limited to the embodiments set forth herein; rather, these embodiments are provided for thoroughness and completeness, and fully convey the scope of the invention to the skilled person.

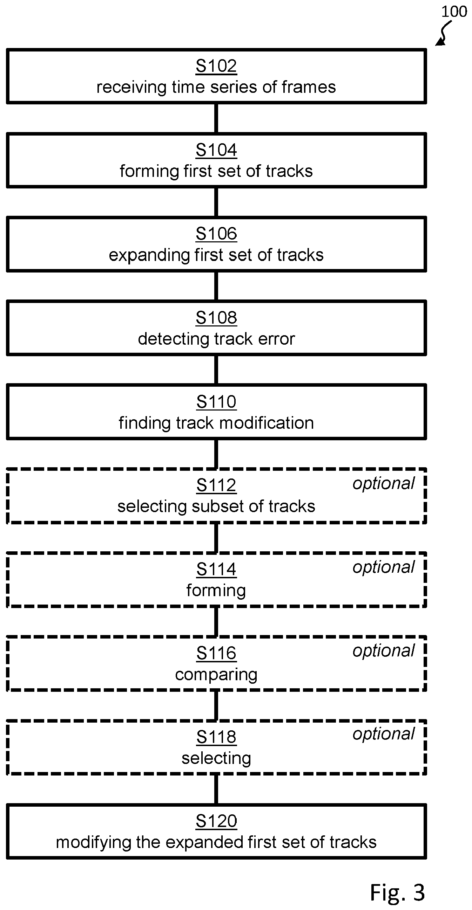

Fig. 3 illustrates the method 100 for tracking objects 1 in a flow channel 2.

According to the method 100, a time series 20 of frames 21 is received S102. Each frame 21 of the time series 20 of frames 21 is associated with a time and comprises observed object positions 4, the observed object positions 4 being object positions observed in the flow channel 2 at said time. The frames 21 may be frames 21 in accordance with those described in conjunction with Fig. 1a-b.

The frames 21 may be processed sequentially and the tracks 41 may be expanded for each new frame 21. Each expansion of the tracks 41 may be done based on solely two frames 21.

To exemplify the method 100, consider a point during the processing of the frames 21 wherein a first set 30 of frames 21 has been processed. A first set 40 of tracks 41 is formed S104, each track 41 of the first set 40 of tracks 41 comprising observed object positions 4 from the first set 30 of frames 21.

The first set 40 of tracks 41 is then expanded S106 by adding observed object positions 4 of the first frame 31 to the first set 40 of tracks 41. Herein, the first frame 31 is a frame 21 succeeding an end frame of the first set 30 of frames 21. For example, the end frame of the first set 30 of frames 21 may be frame i of the time series of frames, and the first frame 31 may be frame i+1 of the first set 30 of frames 21. Observed object positions 4 of frame i+1 may then be added to the tracks 41 of the first set 40 of tracks 41, after the last entries in said tracks 41, the last entries of the tracks 41 being entries corresponding to frame i.

A check for track errors may be then performed and a track error may be detected S108.

The method may then search for a track modification and when the track modification is found S110, the expanded first set 40 of tracks 41 is modified S120 by the track modification. Finding S110 the track modification is herein based on observed object positions 4 from at least three frames 21 of the time series 20 of frames 21.

The method 100 may further comprise the optional steps of selecting S112 a subset of tracks 41 within the expanded first set 40 of tracks 41, the selected subset of tracks 41 being tracks 41 adjacent to the track error. Thus, finding S110 the track modification may be based on said subset of tracks 41 within the expanded first set 40 of tracks 41.

Alternatively, or additionally, the method 100 may further comprise the steps of
forming S114 a plurality of candidate track modifications;
comparing S116 each of the plurality of candidate track modifications to a criterion, the criterion indicating a probable expansion of the first set 40 of tracks 41; and
selecting S118 one of the candidate track modifications which fits the criterion as the track modification to modify the expanded first set 40 of tracks 41.

As previously discussed, the method 100 may be performed in many different ways. For example, the method 100 may be applicable to many different types of track errors. A track error may comprise:
a part of a track 41 of the expanded first set 40 of tracks 41 which shares one observed object position 4 with a part of another track 41 of the expanded first set 40 of tracks 41;
a beginning of a track 41 of the expanded first set 40 of tracks 41 which is not at an entrance 6 of the flow channel;
   an end of a track 41 of the expanded first set 40 of tracks 41 which is not at an exit 8 of the flow channel;
a part of a track 41 of the expanded first set 40 of tracks 41 within a forbidden region, the forbidden region being a region of the flow channel in which the objects 1 cannot enter;
a part of a track 41 of the expanded first set 40 of tracks 41 merging with another track 41 of the expanded first set 40 of tracks 41;
a part of a track 41 of the expanded first set 40 of tracks 41 splitting out from another track 41 of the expanded first set 40 of tracks 41.

As another example, if the track modification is found S110 by the use of candidate track modifications, the selection S118 of the candidate track modifications to be used for modifying S120 the expanded first set 40 of tracks 41 may be done according to any one of the following criteria:
a velocity variance of the object 1 at observed object positions 4 of the candidate track modification being below a threshold;
a brightness variance of the object 1 at observed object positions 4 of the candidate track modification being below a threshold;
a size variance of the object 1 at observed object positions 4 of the candidate track modification being below a threshold;
a circularity variance of the object 1 at observed object positions 4 of the candidate track modification being below a threshold;
a z-direction variance of the object 1 at observed object positions 4 of the candidate track modification being below a threshold;
a total path length of the candidate track modification being below a threshold.

It should, in particular, be understood that the method may comprise any combination of the detection S108 of one of the above given examples of track errors and the finding S110 of a track modification by the use of one of the above given examples of criteria.

However, to be brief, the method 100 is hereinafter exemplified by detection S108 of a part of a track 41 of the expanded first set 40 of tracks 41 which shares one observed object position 4 with a part of another track 41 of the expanded first set 40 of tracks 41 followed by finding S110 of a track modification by the use of a criteria relating to a velocity variance of the object 1 at observed object positions 4 of the candidate track modification being below a threshold.

In this example, consider four consecutive frames 21 corresponding to consecutive times t1, t2, t3, and t4, wherein the frames 21 represent movements of object A and object B, together with movements of other objects. In this example, the observed object positions A1, A2, A3, and A4, represented in the four consecutive frames, are object positions of object A at times t1, t2, t3, and t4. Further, in this example the observed object positions B1, B2, B3, and B4, represented in the four consecutive frames, are object positions of object B at times t1, t2, t3, and t4. A first set 40 of tracks 41 is formed S104 based on the frames corresponding to time t1-t3 and among those tracks 41 there is Track A comprising A1, A2, A3 and track B comprising B1, B2, B3. The first set 40 of tracks 41 is then expanded S106 by adding the observed object positions 4 of the first frame 31 (i.e. the frame corresponding to time t4) to the first set 40 of tracks 41. In this example the tracks 41 are expanded S106 by applying a local tracking algorithm to the frames corresponding to times t3 and t4. The local tracking algorithm may herein search for observed object positions in the first frame 31, herein associated time t4, in the vicinity of observed object positions 4 of the end frame of the first set 30 of frames 21, herein associated with time t3. The local tracking algorithm may e.g. find A4 in the vicinity of A3 and may correctly form expanded track A as A1, A2, A3, A4. Further, for the purpose of this example, the local tracking algorithm may also find A4 in the vicinity of B3 and may incorrectly form expanded track B as B1, B2, B3, A4. Further, for the purpose of this example, the local tracking algorithm may also create a new track, track C, and assign B4 to track C.

According to the method 100, a track error is then detected S108. In this example, the track error may be detected S108 as a part of a track 41 of the expanded first set 40 of tracks 41 which shares one observed object position 4 with a part of another track 41 of the expanded first set 40 of tracks 41. Thus, expanded track B comprising A4 may be detected as a track error since A4 is also comprised in expanded track A.

According to the method 100, a track modification is then found S110, wherein the track modification removes the track error. Finding S110 the track modification is based on observed object positions 4 from at least three frames 21 of the time series 20 of frames 21. In this example, finding S110 the track modification is based on observed object positions 4 from frames associated with times t2, t3, and t4. For example, a plurality of candidate track modifications may be formed S114 and compared S116 to a criterion, after which one candidate track modification which fit the criterion may be selected S118. Finding S110 the track modification may be done using a global tracking algorithm.

All observed object positions 4 in the frames 21 used for finding S110 the track modification may not necessarily be used. For example, a subset of tracks 41 may be selected S112, wherein the subset of tracks 41 are tracks 41 adjacent to the track error. In this example, the subset of tracks 41 may be expanded track A, expanded track B, and track C. Additionally, or alternatively, finding S110 the track modification may be based on a region of interest. In this example, finding S110 the track modification is based only on observed object positions A2, A3, A4, and B2, B3, B4 from frames associated with times t2, t3, and t4 even though there may be other observed object positions 4 in these frames (e.g. object positions associated with objects D, E and F etc.). Different permutations of these observed object positions 4 may represent different candidate track modifications. Examples of candidate track modifications may be:
A2, B3, A4
B2, B3, A4
B2, B3, B4
A2, A3, A4
And so forth.

When these track modifications are compared to e.g. the criterion of a velocity variance of the object 1 at observed object positions 4 of the candidate track modification being below a threshold it may become evident that B2, B3, B4 should be selected S118 as the track modification to replace the last three entries of expanded track B (which was B1, B2, B3, A4). Thus, the expanded first set 40 of tracks 41 is modified S120 accordingly. The selection S118 of B2, B3, B4 as the track modification may herein be based e.g. on B2, B3, B4 having the smallest velocity variance of the candidate track modifications.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A method (100) for tracking objects (1) in a flow channel (2), the method (100) comprising:
receiving (S102) a time series (20) of frames (21), each frame (21) being associated with a time and comprising observed object positions (4), the observed object positions (4) being object positions observed in the flow channel (2) at said time, the time series (20) of frames (21) comprising a first set (30) of frames (21) and a first frame (31), the first frame (31) succeeding an end frame of the first set (30) of frames (21);
forming (S104) a first set (40) of tracks (41), each track (41) of the first set (40) of tracks (41) comprising observed object positions (4) from the first set (30) of frames (21), each track (41) representing a path in space and time of one individual object (1) in the flow channel (2);
expanding (S106) the first set (40) of tracks (41) by adding observed object positions of the first frame (31) to the first set (40) of tracks (41);
detecting (S108) a track error, the track error being a part of a track of the expanded first set (40) of tracks (41) which indicates an improbable expansion of the first set (40) of tracks (41);
finding (S110) a track modification, the track modification being a modification to the expanded first set (40) of tracks (41) which removes the track error, wherein finding the track modification is based on observed object positions (4) from at least three frames (21) of the time series (20) of frames (21); and
modifying (S120) the expanded first set (40) of tracks (41) by the track modification.

2. The method (100) of claim 1, wherein expanding (S106) the first set (40) of tracks (41) is based on solely two frames (21) of the time series (20) of frames (21), said sole two frames (21) being the end frame of the first set (30) of frames (21) and the first frame (31).

3. The method (100) of claim 1 or 2, wherein the track error comprises at least one of:
a part of a track (41) of the expanded first set (40) of tracks (41) which shares one observed object position (4) with a part of another track (41) of the expanded first set (40) of tracks (41);
a beginning of a track (41) of the expanded first set (40) of tracks (41) which is not at an entrance of the flow channel (2);
an end of a track (41) of the expanded first set (40) of tracks (41) which is not at an exit of the flow channel (2);
a part of a track (41) of the expanded first set (40) of tracks (41) within a forbidden region, the forbidden region being a region of the flow channel (2) in which the objects (1) cannot enter;
a part of a track (41) of the expanded first set (40) of tracks (41) merging with another track (41) of the expanded first set (40) of tracks (41);
a part of a track (41) of the expanded first set (40) of tracks (41) splitting out from another track (41) of the expanded first set (40) of tracks (41).

4. The method (100) of any one of the preceding claims, wherein finding the track modification is based on a subset of tracks (41) within the expanded first set (40) of tracks (41).

5. The method (100) of claim 4, wherein finding (S110) the track modification comprises:
selecting (S112) the subset of tracks (41) within the expanded first set (40) of tracks (41), the selected subset of tracks (41) being tracks (41) adjacent to the track error;
wherein the track modification involves only tracks (41) of the expanded first set (40) of tracks (41) that are within the selected subset of tracks (41).

6. The method (100) of any one of the preceding claims, wherein finding (S110) the track modification is based on a region of interest, the region of interest representing observed object positions (4) in part of the flow channel (2).

7. The method (100) of any one of the preceding claims, wherein the track modification comprises a modification of a part of a track (41) that represents a time before the time associated with the first frame (31).

8. The method (100) of any one of the preceding claims, wherein finding (S110) the track modification comprises:
forming (S114) a plurality of candidate track modifications;
comparing (S116) each of the plurality of candidate track modifications to a criterion, the criterion indicating a probable expansion of the first set (40) of tracks (41); and
selecting (S118) one of the candidate track modifications which fits the criterion as the track modification to modify the expanded first set (40) of tracks (41).

9. The method (100) of claim 8, wherein the criterion comprises at least one of:
a velocity variance of the object (1) at observed object positions (4) of the candidate track modification being below a threshold;
a brightness variance of the object (1) at observed object positions (4) of the candidate track modification being below a threshold;
a size variance of the object (1) at observed object positions (4) of the candidate track modification being below a threshold;
a circularity variance of the object (1) at observed object positions (4) of the candidate track modification being below a threshold;
a z-direction variance of the object (1) at observed object positions (4) of the candidate track modification being below a threshold;
a total path length of the candidate track modification being below a threshold.

10. The method (100) of any one of the preceding claims, wherein
expanding (S106) the first set (40) of tracks (41) comprises applying a local tracking algorithm operating on the end frame of the first set (30) of frames (21) and the first frame (31).

11. The method (100) of any one of the preceding claims, wherein
finding (S110) the track modification comprises applying a global tracking algorithm on the at least three frames (21) of the time series (20) of frames (21).

12. The method (100) of any one of the preceding claims, wherein
finding (S110) the track modification comprises calculating a velocity from at least one track (41) of the expanded first set (40) of tracks (41).

13. The method (100) of any one of the preceding claims, wherein the at least three frames (21) of the time series (20) of frames (21) comprises at least one frame succeeding the first frame (31).

14. A computer program comprising instructions which, when the program is executed by a computer, cause the computer to carry out the steps of the method of claims 1-13.

15. A computer-readable storage medium comprising instructions which, when executed by a computer, cause the computer to carry out the steps of the method of claims 1-13.
